# EUROPEAN PATENT APPLICATION

(11) **EP 2 426 389 A1**
(43) Date of publication of application: **07.03.2012**
(21) Application number: 11172765.7
(22) Date of filing: 05.07.2011
(51) Int. Cl.: F16L 11/10, E03C 1/02

(54) **An improved flexible hose construction**

(30) Priority: 01.09.2010 IT MI20101593
(71) Applicant: P.G.I. Parigi Group International S.p.A., 20052 Monza (MB) (IT)
(72) Inventor: Parigi, Cesare, I-20052 Monza (MB) (IT)
(74) Representative: Cicogna, Franco

(57) **Abstract**

An improved flexible hose construction (1), characterized in that said hose construction (1) comprises a flexible plastic material core (2) encompassed by a braid arrangement (3) including a plurality of braided strip elements (4) so braided as to fully encompass said core (2).

## Description

### BACKGROUND OF THE INVENTION

The present invention relates to an improved flexible hose construction.

Flexible hoses comprising a plastics material core encompassed by metal braids are already known.

The plastics material core provides a target hydraulic tightness, whereas the metal braid provides a flexible hose with the required mechanical strength.

The metal braid comprises a plurality of wire strands, usually made of a stainless steel material.

The above mentioned prior flexible hoses are used in several application fields, for example for coupling sanitary and heating fittings to a hot and cold water supplying system.

### SUMMARY OF THE INVENTION

The aim of the present invention is to provide such a flexible hose construction which is very improved with respect to prior flexible hoses.

Within the scope of the above mentioned aim, a main object of the invention is to provide such a flexible hose construction comprising a synthetic resin core encompassed by a metal or synthetic material braid.

Another object of the present invention is to provide such a flexible hose construction which has enhanced strength and abrading resistance characteristics.

Yet another object of the present invention is to provide such a flexible hose construction, which, owing to its specifically designed structural features, is very reliable and safe in operation.

According to one aspect of the present invention, the above mentioned aim and objects, as well as yet other objects, which will become more apparent hereinafter, are achieved by an improved flexible hose construction, characterized in that said hose construction comprises a flexible plastic material core encompassed by a braid arrangement including a plurality of braided strip elements, made either of a plastic material or a metal material, so braided as to fully encompass said core.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:

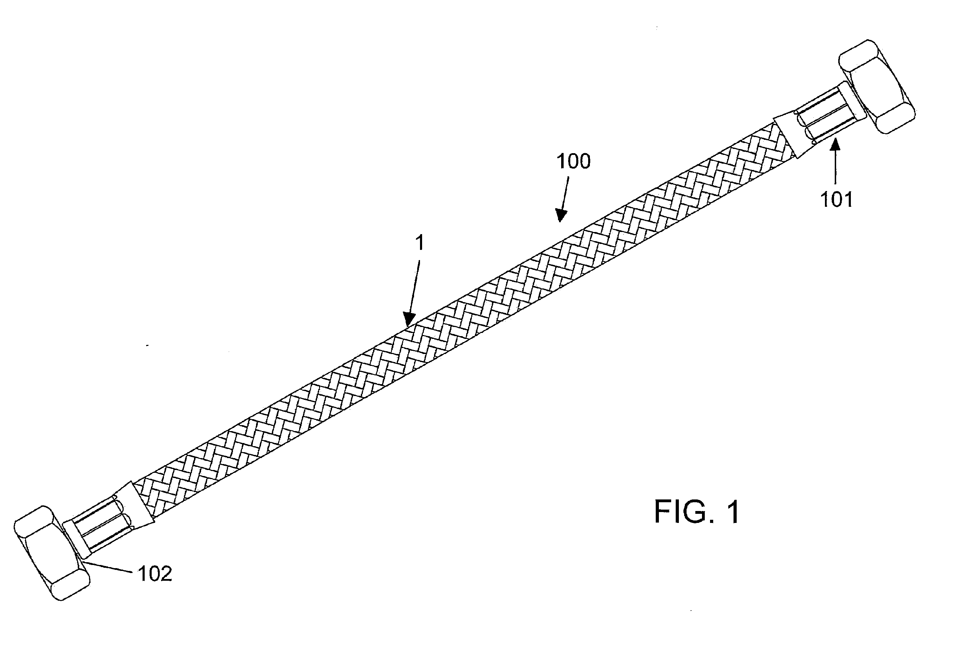

Figure 1 is a perspective view of a fitting element made by the improved flexible hose construction according to the present invention;

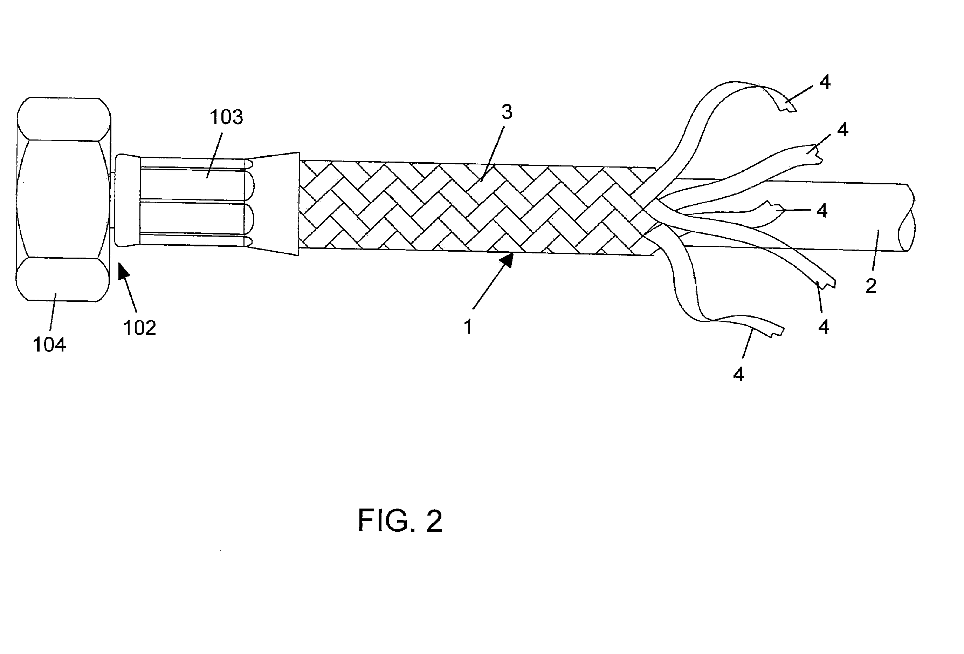

Figure 2 is an enlarged view, shown on an enlarged scale with respect to Figure 1, showing an end portion of the fitting element and a construction portion in a partially disassembled condition thereof; and

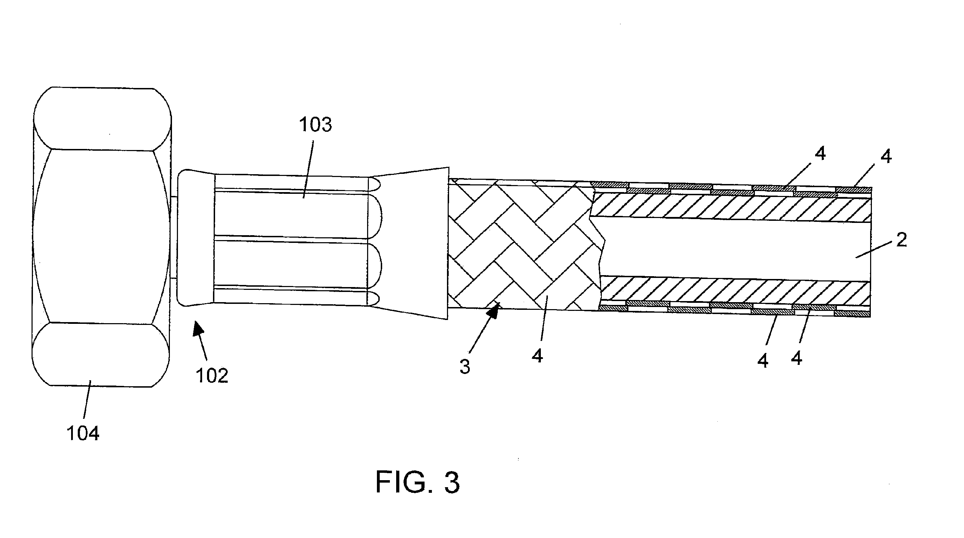

Figure 3 is a further enlarged longitudinal cross-section view showing the end portion of the fitting elements of Figures 1 and 2.

### DESCRIPTION OF THE PREFERRED EMBODIMENTS

With reference to the number references of the above mentioned figures, the flexible hose construction according to the present invention, which has been generally indicated by the reference number 1, comprises a flexible plastic material core 2, encompassed by an encompassing braid arrangement 3.

According to the present invention, the braid arrangement 3 comprises a plurality of strip elements 4, so braided as to fully encompass said core 2.

The strip elements 4 may be constituted either of metal strip elements, for example made of a stainless steel material, or synthetic material strip elements, such as nylon, or any other materials having the required mechanical characteristics.

The flexible hose construction 1 according to the present invention may be used for making, for example, a fitting 100 of the type shown in the figures.

The fitting 100 comprises two end portions 101 and 102, including a sleeve 103 locking the end portion of the flexible hose construction 1 and comprising a locking nut 104 for locking the assembly, in a per se known manner.

It has been found that the invention fully achieves the intended aim and objects.

In fact, the invention has provided a flexible hose construction in which the core, made either of a plastics or a rubber material, is encompassed by a braid arrangement constituted by strip elements instead of wire elements.

The strip element material has mechanical strength characteristics much higher than those of a whole wire material.

Moreover, it is possible to make flexible hoses having an overall cross-section smaller than that of flexible hoses including a braiding arrangement constituted by braiding wires.

Moreover, the improved flexible hose construction according to the present invention allows to use plastics material for making the strip braid, whereas a wire braid would not have a sufficient or satisfactory mechanical strength.

Moreover, the use of a braiding arrangement constituted by plastics material strip elements provides the advantages of an enhanced chemical and atmospheric agent resistance, much greater than that of steel, without affecting the mechanical strength characteristics.

In practicing the invention, the used materials, as well as the contingent size and shapes, may be any, according to requirements.

## Claims

1. An improved flexible hose construction, **characterized in that** said hose construction comprises a flexible plastic material core encompassed by a braid arrangement including a plurality of braided strip elements so braided as to fully encompass said core.

2. A flexible hose construction, according to claim 1, **characterized in that** said strip elements comprise strips made of a metal material, such as a stainless steel material, or a synthetic material such as nylon or any other material having required mechanical characteristics.

3. A flexible fitting, **characterized in that** said flexible fitting comprises a flexible hose construction length including a flexible plastics material core encompassed by a braid arrangement including a plurality of braided strip elements so braided as to fully encompass said core, said flexible hose construction length including, at the two end portions thereof, sleeve elements each provided with a locking threaded nut.
